# EUROPÄISCHE PATENTSCHRIFT

(11) **EP 3 680 015 B1**
(45) Veröffentlichungstag und Bekanntmachung des Hinweises auf die Patenterteilung: **06.03.2024**
(21) Anmeldenummer: 19151598.0
(22) Anmeldetag: 14.01.2019
(51) Int. Cl.: B01J 35/00, B01J 23/46, B01D 53/86, B01J 35/06, F01N 3/00, C01B 21/26, B01J 19/24

(54) **KATALYSATORSYSTEM SOWIE VERFAHREN ZUR KATALYTISCHEN VERBRENNUNG VON AMMONIAK ZU STICKSTOFFOXIDEN IN EINER MITTELDRUCKANLAGE**
CATALYST SYSTEM AND METHOD FOR THE CATALYTIC COMBUSTION OF AMMONIA TO FORM NITROGEN OXIDES IN A MEDIUM PRESSURE SYSTEM
SYSTÈME DE CATALYSEUR AINSI QUE PROCÉDÉ DE COMBUSTION CATALYTIQUE D'AMMONIAC EN OXYDE D'AZOTE DANS UNE INSTALLATION MOYENNE PRESSION

(43) Veröffentlichungstag der Anmeldung: 15.07.2020
(73) Patentinhaber: Heraeus Precious Metals GmbH & Co. KG, 63450 Hanau (DE)
(72) Erfinder: Boll, Willi, 63450 Hanau (DE); Maier, Dirk, 63450 Hanau (DE)
(74) Vertreter: Staudt, Armin Walter

(56) Entgegenhaltungen:
- WO-A1-01/87771
- WO-A2-02/062466
- DE-A1- 2 145 842

## Beschreibung

### Technisches Gebiet

Die vorliegende Erfindung betrifft ein Katalysatorsystem für die katalytische Verbrennung von Ammoniak zu Stickstoffoxiden in einer Mitteldruckanlage, mit einer Vielzahl aus platinbasiertem Edelmetalldraht gestrickter, gewirkter oder gewebter, ein- oder mehrlagiger Katalysatornetze, die in einer Frischgas-Strömungsrichtung gesehen hintereinander angeordnet eine vordere Gruppe von Netzlagen und mindestens eine der vorderen Gruppe nachgeordnete stromabwärtige Gruppe von Netzlagen bilden.

Außerdem betrifft die Erfindung ein Verfahren zur katalytischen Verbrennung von Ammoniak zu Stickstoffoxiden in einer Mitteldruckanlage, indem ein Ammoniak und Sauerstoff enthaltendes Frischgas durch ein Katalysatorsystem geleitet und Ammoniak dabei verbrannt wird.

Durch heterogen edelmetallkatalysierte Oxidation von Ammoniak mit Sauerstoff zu Stickoxid nach dem Ostwald-Verfahren wird im großtechnischen Maßstab Salpetersäure für die chemische Industrie und für die Düngemittelproduktion hergestellt.

### Stand der Technik

Die dafür eingesetzten Katalysatorsysteme werden in die Reaktionszone eines Strömungsreaktors in einer Ebene senkrecht zur Strömungsrichtung des Frischgases eingebaut, wobei häufig mehrere Katalysatornetze hintereinander angeordnet und zu einer sogenannten Katalysator-Packung zusammengefasst sind.

Die Katalysatornetze bestehen aus ein- oder mehrlagigen Gestricken, Gewirken oder Geweben aus feinen Edelmetalldrähten. Die Edelmetalldrähte bestehen überwiegend aus Platin (Pt), Palladium (Pd), Rhodium (Rh) oder aus Legierungen dieser Metalle.

Die Ammoniakoxidation kann bei niedrigem Druck (1-3 bar; PtRh10), mittlerem Druck (3,5-7 bar; PtRh5) oder bei hohem Druck (8-14 bar, PtRh3) erfolgen. In der Klammer ist die für den jeweiligen Druckbereich typische binäre PtRh-Legierung genannt, wobei die Ziffer den Rhodiumanteil in Gewichtsprozenten angibt).

Aus der DE 101 05 624 A1 ist ein Strömungsreaktor zur katalytischen Oxidation von Ammoniak bekannt, bei dem das Katalysatorsystem als Packung mehrerer, parallel zueinander verlaufender Katalysatornetze ausgebildet ist. Die Packung ist derart in der Reaktionszone angeordnet, dass die von den Katalysatornetzen aufgespannten Ebenen senkrecht zur Strömungsrichtung eines die umzusetzenden Edukte enthaltenden Fluids verlaufen. Zur Verbesserung der katalytischen Aktivität und der Selektivität der katalysierten Reaktion sowie der mechanischen Festigkeit und Standzeit der Katalysator-Packung wird der Einsatz eines dreidimensional gestrickten Katalysatornetzes vorgeschlagen, bei dem die einzelnen Maschenlagen durch Polfäden miteinander verbunden sind. Maschen- und Polfäden bestehen aus demselben Werkstoff; beispielsweise aus PtRh5 oder aus PtRh8.

Die EP 3 056 267 A1 schlägt zur Reduktion der N₂O-Bildung in einem Mitteldruck-Ammoniakoxidationsverfahren ein modifiziertes Edelmetall-Katalysatornetz vor, bei dem in eine Maschenlage aus gewirkten Edelmetalldrähten aus Pd oder aus einer Pd-reichen Legierung zur Verstärkung ein zweiter Edelmetalldraht mit anderer Zusammensetzung eingearbeitet ist, der beispielsweise aus einer PtRh-Legierung mit 1-10% Rh hergestellt ist. Zur Ermittlung der katalytischen Eigenschaften des modifizierten Katalysatornetzes wird dieses in einen Testreaktor zusammen mit anderen Katalysatornetzen gemäß einem industriellen Standard eingebaut und bei einem Druck von 5 bar und einer Temperatur von 890°C die zeitliche Entwicklung von N₂O ermittelt. Als Standard wird dabei ein gestricktes oder gewirktes (knitted) Katalysatornetz aus Edelmetalldraht aus einer PtRh5-Legierung mit einem Durchmesser von 76 µm und mit einem Flächengewicht von 600 g/m² verwendet.

Das aus der WO 01/87771 A1 bekannte Katalysatorsystem zur Reduzierung von Distickstoffoxid, das bei der katalytischen Verbrennung von Ammoniak und Sauerstoff zu Stickstoffoxiden gebildet wird, umfasst in Strömungsrichtung des Frischgases gesehen mindestens ein erstes Katalysatornetz und mindestens ein zweites Katalysatornetz. Die Katalysatornetze sind jeweils durch Wirken, Stricken, Weben oder Vlieslegen hergestellt. Das erste Katalysatornetz besteht aus einer PtRh-Legierung mit 5 bis 10 Gew.-% Rhodium, und das zweite Katalysatornetz besteht aus einer PdRh-Legierung mit mindestens 92 Gew.-% Palladium und 2-4 Gew.-% Rhodium, Rest Platin. Alternativ besteht das zweite Katalysatornetz aus 82 bis 83 Gew.-% Palladium und 2,5-3,5 Gew.-% Rhodium, Rest Platin. Die N₂O-Entwicklung des mit dem Katalysatorsystem bestückten Reaktors wird mit einem Industriereaktor verglichen, der bei einem Reaktordruck von 4,8 bar und einer Temperatur von 880°C betrieben wird und der mit zwei Standard-Katalysatorsystemen ausgestattet ist, von denen eines eine Katalysator-Packung aus PtRh5- und PdNi5-Netzen und das andere eine Katalysator-Packung aus PtRh5- und PdNi5-Netzen ist.

Die WO 2002/062466 A2 beschreibt ein mehrlagiges Katalysatorsystem, mit miteinander verbundenen Netzlagen, die sich in ihrem Flächengewicht unterscheiden, aber alle aus PtRh8 beziehungsweise aus PtRh5 bestehen.

In der DE 21 45 842 A1 ist erwähnt, dass nach Einsatz eines Katalysatorsystems ein Verlust an Palladium ermittelt worden ist, der hoch ist im Vergleich zum Verlust an Platin. Dies wird darauf zurückgeführt, dass die Katalysatornetze auf der Gasaustrittsseite das in dem Gasstrom mitgeführte Platin wieder aufnehmen.

### Technische Aufgabenstellung

Bei der Verbrennung von Ammoniak mittels Sauerstoff fällt das ozonschädigende und zu den Treibhausgasen zählende Distickstoffoxid (N₂O) als unerwünschtes Nebenprodukt an. Es ist daher wichtig, die Bildung von N₂O bei der Verbrennungsreaktion möglichst zu vermeiden, ohne dass die Ausbeute an gewünschten Stickstoffoxiden beeinträchtigt wird.

In Salpetersäureanlagen kommen je nach Bauart zwischen 2 und 30 KatalysatorNetze bis zu 6 m Durchmesser zum Einsatz. Infolge von Oxidation und Sublimation verlieren die Katalysatornetze während des Ammoniakoxidationsprozesses Edelmetall, so dass sie von Zeit zu Zeit (Standzeit, Gebrauchsdauer) mit gewissem Aufwand ausgetauscht werden müssen. Der Edelmetalleinsatz ist teuer und wird so gering wie möglich gehalten. Andererseits nimmt die "katalytische Effizienz", die eine wichtige Kenngröße und ein Maß für dauerhaft hohe Umsätze der Edukte und gute Ausbeute ist, in der Regel mit steigendem Edelmetall-Anteil bis zu einem maximalen Anteil zu.

Als geeigneter Kompromiss hinsichtlich Standzeit, katalytischer Effizienz und Edelmetalleinsatz hat sich die PtRh5-Legierung erwiesen, die sich - wie in der EP 3 056 267 A1 und der WO 01/87771 A1 erwähnt - als industrieller Standard für Edelmetallkatalysatoren für den Einsatz in Mitteldruckanlagen durchgesetzt hat.

Der Erfindung liegt die Aufgabe zugrunde, ein Katalysatorsystem für den Einsatz in einer Mitteldruckanlage für die Ammoniakoxidation bereitzustellen, mit dem ohne Inkaufnahme von Nachteilen bezüglich der Standzeit (Edelmetallverluste) und der Bildung des unerwünschten Nebenprodukts N₂O eine im Vergleich zum industriellen Standard höhere Ausbeute des Hauptprodukts NO, und damit eine höhere katalytische Effizienz erzielt werden kann.

Außerdem liegt der Erfindung die Aufgabe zugrunde, ein Verfahren für die Ammoniakoxidation in einer Mitteldruckanlage anzugeben, mittels dem eine vergleichsweise hohe NO-Produktausbeute ohne Inkaufnahme von Nachteilen bezüglich der Standzeit und der Bildung von N₂O erzielbar ist.

### Zusammenfassung der Erfindung

Hinsichtlich des Katalysatorsystems wird diese Aufgabe ausgehend von einem Katalysatorsystem der eingangs genannten Gattung erfindungsgemäß dadurch gelöst, dass die vordere Gruppe eine Netzlage aus einem ersten, rhodiumreichen Edelmetalldraht umfasst, wobei die Netzlage aus dem rhodiumreichen Edelmetalldraht eine dem Frischgas zugewandte, vorderste Netzlage ist, und dass die stromabwärtige Gruppe Netzlagen aus einem zweiten, rhodiumarmen Edelmetalldraht umfasst, wobei der rhodiumreiche Edelmetalldraht und der rhodiumarme Edelmetalldraht aus Platin und Rhodium bestehen und der Rhodiumgehalt im rhodiumreichen Edelmetalldraht mindestens 7 Gew.-% und maximal 9 Gew.-% beträgt und der Rhodiumanteil im rhodiumarmen Edelmetalldraht im Bereich von 4 bis 6 Gew.-% liegt.

Das Katalysatorsystem umfasst eine Katalysatorpackung, die sich aus platinbasierten Katalysatornetzlagen der vorderen und der stromabwärtigen Katalysatornetzlagen-Gruppe zusammensetzt, sowie etwaige Getternetze, die hier nicht näher betrachtet werden. Die Katalysatornetzlagen der Katalysatorpackung werden von ein- oder mehrlagigen Katalysatornetzen aus platinbasierten Edelmetalldrähten gebildet. Sofern nichts anderes gesagt ist, wird im Folgenden als Äquivalent zu "Katalysatornetzlage" auch der Begriff "Katalysatornetz" im Sinne eines einlagigen Katalysatornetzes verwendet.

Die vordere Gruppe beinhaltet mindestens eine Katalysatornetzlage. Die stromabwärtige Gruppe stellt in der Regel den größten Volumen- und Gewichtsanteil des Katalysatorsystems und umfasst eine Vielzahl von Katalysatornetzlagen. Die vordere Gruppe und die stromabwärtige Gruppe können durch Katalysatornetze mit anderer Zusammensetzung voneinander getrennt sein. Im bevorzugten Fall liegen sie aber unmittelbar benachbart zueinander.

Die vordere Gruppe beinhaltet die in Frischgas-Strömungsrichtung gesehen vorderste Katalysatornetzlage, die aus dem rhodiumreichen Edelmetalldraht besteht.

Die Katalysatornetze der beiden Gruppen bestehen aus gewirkten, gewebten oder gestrickten Edelmetalldrähten, die sich in ihrer Zusammensetzung unterscheiden. Beim rhodiumreichen Edelmetalldraht der vorderen Gruppe beträgt der Rhodiumgehalt mindestens 7 Gew.-% und maximal 9 Gew.-%. Der Rhodium-Gewichtsanteil im rhodiumarmen Edelmetalldraht der Katalysatornetzlage(n) der stromabwärtigen Gruppe; deren Rhodium-Gewichtsanteil beträgt demnach nicht mehr als 6 %, nämlich zwischen 4 und 6 Gew.-%.

Der Rhodiumanteil im rhodiumreichen Edelmetalldraht der vorderen Gruppe liegt mit mindestens 7 Gew.-% höher als der auf Effizienz, Gebrauchsdauer und N₂O-Vermeidung optimierte Standard bei industriellen Salpetersäureanlagen für den Mitteldruckbetrieb, der bei 5 Gew.-% liegt. Es ist daher überraschend, dass durch Einsatz des rhodiumreichen Edelmetalldrahts eine höhere katalytische Effizienz erzielbar ist, ohne dass dies negative Auswirkungen auf Gebrauchsdauer und N₂O-Bildung hat. Dieses Ergebnis wird aber nicht erzielt, wenn alle in Strömungsrichtung des Frischgases folgenden Katalysatornetzlagen ebenfalls aus einem rhodiumreichen Edelmetalldraht bestehen, sondern nur dann, wenn in Strömungsrichtung des Frischgases der Rhodiumanteil abnimmt und die Katalysatornetzlagen der stromabwärtigen Gruppe aus rhodiumarmem Edelmetalldraht bestehen, wobei hier der Rhodium-Gewichtsanteil zwischen 4 und 6 Gew.-% beträgt, und vorzugsweise im Bereich des industriellen Standardwertes von 5 Gew.-% liegt.

Bei Verwendung von Legierungen mit einem niedrigeren Rhodium-Anteil als 7 Gew.-% beim rhodiumreichen Edelmetalldraht wird eine geringe Erhöhung der katalytischen Effizienz erreicht. Bei einem höheren Rhodium-Anteil als 9 Gew.-% können sich bei ungünstigen Druckverhältnissen und Temperaturen Rhodiumoxide bilden, die eine über die Gebrauchsdauer des Katalysatorsystems schleichende Beeinträchtigung der katalytischen Effizienz hervorrufen.

In der Regel entfällt der größte Anteil am Gesamtgewicht der Katalysatornetze einer Katalysatorpackung des Katalysatorsystems von beispielsweise mindestens 70 % auf Katalysator-Netzlagen aus dem rhodiumarmen Edelmetalldraht, und es genügt, wenn nur ein kleiner Gewichtsanteil von beispielsweise weniger als 30 %, vorzugsweise weniger als 25 %, und besonders bevorzugt weniger als 20 % auf Netzlagen der vorderen Gruppe aus dem rhodiumreichen Edelmetalldraht entfällt. Es hat sich beispielsweise bewährt, wenn die vordere Gruppe maximal drei Netzlagen umfasst.

Hinsichtlich einer hohen katalytischen Effizienz bei gleichzeitig geringen oder keinen negativen Auswirkungen auf Gebrauchsdauer und N₂O-Bildung hat es sich bewährt, wenn der Rhodiumanteil im rhodiumreichen Edelmetalldraht im Bereich von 7,8 bis 8,2 Gew.-% und der Rhodiumanteil im rhodiumarmen Edelmetalldraht im Bereich von 4,8 bis 5,2 Gew.-% liegen.

Das Katalysatorsystem kann Katalysatornetze aus Edelmetalldraht auf Basis anderer Edelmetalle, wie Palladium oder Iridium enthalten, oder Edelmetalldraht aus einer Legierung, die außer Platin und Rhodium ein anderes Edelmetall oder mehrere andere Edelmetalle enthält. Bevorzugt besteht aber sowohl der rhodiumarme Edelmetalldraht als auch der rhodiumreiche Edelmetalldraht aus einer binären PtRh-Legierung.

Es hat sich überraschend gezeigt, dass es zur Erhöhung der katalytischen Effizienz genügt, wenn die vorderste Netzlage die vordere Gruppe der Netzlagen alleine bildet. Dies stellt eine besonders einfache und daher bevorzugte Ausführungsform des Katalysatorsystems dar.

Im Hinblick darauf hat es sich auch als vorteilhaft erwiesen, wenn die vorderste Netzlage - beispielsweise als Einzellage oder als Mehrfachlage eines mehrlagigen Katalysatornetzes - auf den Netzlagen der stromabwärtigen Gruppe aufliegt. In dem Fall befindet sich der die Katalysatorpackung beinhaltende Strömungsreaktor in senkrechter Position und die Strömungsrichtung ist senkrecht von oben nach unten gerichtet.

Die aufgelegte, vorderste Netzlage bildet dabei einen Teil der Katalysatorpackung. Reibung und Gewichtskraft genügen für die Fixierung der vordersten Netzlage. Dies vereinfacht die Herstellung des Katalysatorsystems und die Nachrüstung bestehender Katalysatorsysteme zu einem Katalysatorsystem gemäß der vorliegenden Erfindung.

Es hat sich außerdem eine Ausführungsform als günstig erwiesen, bei der die Katalysatornetze in der Frischgas-Strömungsrichtung gesehen hintereinander angeordnet eine Katalysatorpackung aus einem vorderen Ensemble mit drei Katalysatornetzen mit einem ersten mittleren Flächengewicht und einem dem vorderen Ensemble nachgeordneten, stromabwärtigen Ensemble von Katalysatornetzlagen mit einem zweiten mittleren Flächengewicht bilden, wobei das mittlere Flächengewicht des vorderen Ensembles bezogen auf das zweite mittlere Flächengewicht ein Mindergewicht im Bereich von 1,5 % bis 29% aufweist, und wobei das erste mittlere Flächengewicht im Bereich von 410 bis 530 g/m² und das zweite mittlere Flächengewicht im Bereich von 540 bis 790 g/m² liegen.

Im vorderen Ensemble sind die in Frischgas-Strömungsrichtung gesehen ersten drei Katalysatornetzlagen zusammengefasst. Es grenzt an das stromabwärtige Ensemble an, das ebenfalls mehrere Katalysatornetzlagen umfasst.

Die Katalysatornetzlagen haben vor ihrem bestimmungsgemäßen Einsatz ein anfängliches nominales Flächengewicht, das beispielsweise in einer Spezifikation oder einer anderen Vorgabe festgelegt ist. Die Katalysatornetzlagen eines Ensembles können das gleiche nominale Flächengewicht haben, oder sie können sich darin voneinander unterscheiden. Betrachtet wird hier das mittlere Flächengewicht des Ensembles, das definiert ist als Quotient aus der Summe der nominalen (anfänglichen) Flächengewichte und der Anzahl der Katalysatornetze des jeweiligen Ensembles. Die ein- oder mehrlagigen Katalysatornetze bestehen aus platinbasiertem Edelmetalldraht mit einem Durchmesser d. Das Flächengewicht einer Katalysatornetzlage hängt unter anderem vom Durchmesser des jeweiligen Edelmetalldrahts ab. Je größer der Drahtdurchmesser ist, umso höher liegt bei gegebener Maschenweite das Flächengewicht.

Die im vorderen Ensemble zusammengefassten Katalysatornetze haben ein geringeres mittleres Flächengewicht als die Katalysatornetze des stromabwärtigen Ensembles. Dadurch reduziert sich die Edelmetalleinsatzmenge um 1,5% bis maximal 29 %, vorzugsweise maximal 25% (bezogen auf das zweite mittlere Flächengewicht) und darüber hinaus ergibt sich im vorderen Längenabschnitt der Katalysatorpackung eine geringere Raumerfüllung, die mit einer Verringerung des Edelmetalleinsatzes einhergeht und die zugleich zu einem verminderten Verlust an Edelmetall führt.

Es hat sich gezeigt, dass die Verringerung der Raumerfüllung eine gute Durchströmung der Katalysatorpackung bei gleichzeitig hoher mechanischer Stabilität gewährleistet und dass die Verringerung des Edelmetalleinsatzes nicht zu einer nennenswerten Verringerung der Ausbeute an Stickoxiden führt, wenn das vordere Ensemble auf wenige gewichtsreduzierte Katalysatornetzlagen beschränkt ist. An und für sich wäre zu erwarten, dass mit der Einsparung an Edelmetall auch eine merkliche Verringerung der katalytischen Effizienz des Katalysatorsystems einhergeht. Es wurde aber überraschend gefunden, dass die katalytische Effizienz weitgehend - im Rahmen einer Messgenauigkeit von etwa 0,3% (absolut) - beibehalten werden kann, wenn gleichzeitig der Unterschied zwischen erstem mittlerem und zweitem mittlerem Flächengewicht gering gehalten wird, und zwar - bezogen auf das zweite mittlere Flächengewicht - im Bereich von 1,5% bis 29 % und vorzugsweise maximal 25 % liegt.

Die gewünschte weitgehende Beibehaltung der katalytischen Effizienz setzt einen vergleichsweise engen Bereich der mittleren Flächengewichte der Katalysatornetzlagen von erstem und zweitem Ensemble voraus, wie oben angegeben. Besonders bewährt hat sich eine Ausführungsform des Katalysatorsystems, bei der das erste mittlere Flächengewicht im Bereich von 415 bis 510 g/m² liegt, und das zweite mittlere Flächengewicht im Bereich von 575 bis 710 g/m² liegt.

Die Unterschiede im Flächengewicht bzw. im mittleren Flächengewicht können auf der Drahtstärke des Edelmetalldrahts beruhen. Es hat sich aber als besonders günstig erwiesen, wenn die Katalysatornetzlagen des vorderen und stromabwärtigen Ensembles aus einem Edelmetalldraht mit gleicher oder etwa gleicher Drahtstärke gefertigt sind, und wenn der Unterschied im Flächengewicht im Wesentlichen aufgrund unterschiedlicher Wirk-, Strick- oder Webmuster der Katalysatornetze erzeugt wird. Demnach bestehen die Katalysatornetzlagen des vorderen Ensembles aus einem Gewirk mit einem ersten Wirkmuster und einer ersten Maschenweite, oder aus einem Gewebe mit einem ersten Webmuster und einer ersten Maschenweite oder aus einem Gestrick mit einem ersten Strickmuster und einer ersten Maschenweite, und die Katalysatornetzlagen des stromabwärtigen Ensembles bestehen aus einem Gewirk mit einem zweiten Wirkmuster und einer zweiten Maschenweite oder aus einem Gewebe mit einem zweiten Webmuster und einer zweiten Maschenweite oder aus einem Gestrick mit einem zweiten Strickmuster und einer zweiten Maschenweite, wobei die erste Maschenweite größer ist als die zweite Maschenweite.

Der Unterschied im Flächengewicht beruht daher nicht oder nicht ausschließlich auf Unterschieden in den Drahtstärken, sondern im Wesentlichen auf unterschiedlichen Wirk-, Strick- oder Webmustern der Katalysatornetze, und zwar auf den Maschenweiten. Die Maschenweite der Katalysatornetzlagen des vorderen Ensembles bewirkt somit im Wesentlichen ein um maximal 29%, vorzugsweise maximal 25% geringeres mittleres Gewicht pro Flächeneinheit als bei den Katalysatornetzlagen des stromabwärtigen Ensembles. Die Katalysatornetzlagen des stromabwärtigen Ensembles sind beispielsweise in Form von Standard-Katalysatornetzen für den Mitteldruckbetrieb mit einem Drahtdurchmesser von 76 µm und einem Flächengewicht von 600 g/m² ausgebildet.

Die vergleichsweise offenere Ausführung der Maschen in den Katalysatornetzlagen des vorderen Ensembles kann auch zu einer verbesserten Ausnutzung der sich in der Katalysatorpackung einstellenden Strömung und so zu einer höheren Selektivität des Katalysatorsystems beitragen. Denn üblicherweise erfolgt die Reaktion im Netzpaket in den vorderen (obersten) Netzlagen, wodurch diese besonders stark thermisch und mechanisch belastet werden. Durch eine offenere Ausführung der Maschen in diesem Bereich kann die Belastung der oberen Netzlagen auf weiter unten liegende Netzlagen verteilt werden, so dass sich trotz des geringeren Edelmetalleinsatzes die Effizienz des Katalysatorsystems nicht wesentlich verringert.

Die gewichtsreduzierten Katalysatornetze des "vorderen Ensembles" mit dem ersten, niedrigeren mittleren Flächengewicht können gleichzeitig die Netzlagen der "vorderen Gruppe" aus der rhodiumreichen Legierung bilden; in der Regel - und bevorzugt - unterscheiden sich diese Baueinheiten der Katalysatorpackung jedoch.

Je geringer das individuelle Flächengewicht einer einzelnen Katalysatornetzlage ist, umso größer ist die Einsparung an Edelmetall. Andererseits kann die katalytische Effizienz des Katalysatorsystems bei geringen mittleren Flächengewichten nachlassen. Daher ist bei einer bevorzugten Ausführungsform des Katalysatorsystems vorgesehen, dass das individuelle Flächengewicht der Katalysatornetzlagen des vorderen Ensembles in der Abfolge in Frischgas-Strömungsrichtung gesehen konstant ist oder zunimmt.

Hinsichtlich des Verfahrens wird die oben genannte technische Aufgabe ausgehend von einem Verfahren der eingangs genannten Gattung dadurch gelöst, dass das Frischgas mit einem Ammoniakgehalt zwischen 9,5 und 12 Vol.-% unter einem Druck im Bereich zwischen 3,5 und 7 bar, bei einer Katalysatornetztemperatur im Bereich von 870 bis 920°C und mit einem Durchsatz im Bereich von 6 bis 16 tN/m²d durch ein Katalysatorsystem gemäß der vorliegenden Erfindung geleitet wird.

Die Abkürzung "tN/m²d" steht dabei für "Tonnen Stickstoff (aus Ammoniak) pro Tag und effektiver Querschnittsfläche der Katalysatorpackung in Quadratmeter.

Das Verfahren ist für den Betrieb im Mitteldruckbereich zwischen 3,5 und 7 bar ausgelegt. Bei einem Ammoniak-Anteil von weniger als 9,5 Vol.-% im Frischgas und bei einem Durchsatz von weniger als 6 tN/m²d kann der Verbrennungsprozess ungewollt zum Erliegen kommen. Ein NH₃-Anteil von mehr als 12 Vol.-% im Frischgas liegt nah an der Sicherheitsschwelle zum explosionsfähigen Gemisch. Bei einer Katalysatornetztemperatur von weniger als 870°C kann es zunehmend zur Bildung von Rhodiumoxid kommen; und bei einer Katalysatornetztemperatur oberhalb von 920°C setzt die Platinoxidabdampfung verstärkt ein. Die Katalysatornetztemperatur wird durch die Vorheiz-Temperatur des Frischgases beeinflusst, die vorzugsweise im Bereich von 150 und 220°C liegt.

### Definitionen

### Edelmetalldraht

Unter einem edelmetallhaltigen Draht wird ein Draht verstanden, der aus Edelmetall besteht oder einen nennenswerten Anteil (> 50 Gew.-%) an Edelmetall enthält. Eine platinbasierte Legierung enthält mehr als 50 Gew.-% Platin. Als weitere Legierungsbestandteile sind insbesondere Palladium, Rhodium und Ruthenium zu nennen. Typische Edelmetalldraht-Durchmesser liegen im Bereich von 40 bis 120 µm.

### Mitteldruckanlagen

In Mitteldruckanlagen erfolgt die Ammoniakoxidation bei einem Druck im Bereich von 3,5 bis 7 bar. Für diesen Druckbereich haben sich Edelmetall-Katalysatoren aus Edelmetalldraht aus einer binären PtRh5-Legierung mit einem Durchmesser von 76 µm und einem Flächengewicht von etwa 600 g/m² als Standard etabliert.

### Katalysatornetz

Ein durch Weben, Wirken oder Stricken eines Edelmetalldrahts oder mehrerer Edelmetalldrähte erzeugtes, einlagiges oder mehrlagiges textiles Flächengebilde. Die textile Flächenbildung wird durch maschenförmiges Verschlingen eines oder mehrerer Fadensysteme beziehungsweise Drahtsysteme erreicht.

### Katalysatorsystem

Das Katalysatorsystem umfasst eine Katalysatorpackung sowie in der Regel ein Getternetz oder mehrere Getternetze, die ebenfalls durch Stricken, Weben oder Wirken von Edelmetalldraht erzeugt sind.

### Katalvsatorpackunq

Eine Anordnung mehrerer Katalysatornetze in Strömungsrichtung des Frischgases hintereinander.

### Ausführungsbeispiel

Nachfolgend wird die Erfindung anhand von Ausführungsbeispielen und einer Zeichnung erläutert. Dabei zeigt:
- **Figur 1**: einen Strömungsreaktor zur heterogen-katalytischen Verbrennung von Ammoniak in schematischer Darstellung,
- **Figur 2**: ein Säulendiagramm mit Ergebnissen zur katalytischen Effizienz von Testreaktoren im Vergleich zu einem Referenzreaktor, und
- **Figur 3**: ein Säulendiagramm mit Ergebnissen zur N₂O-Bildung der Testreaktoren im Vergleich zu dem Referenzreaktor

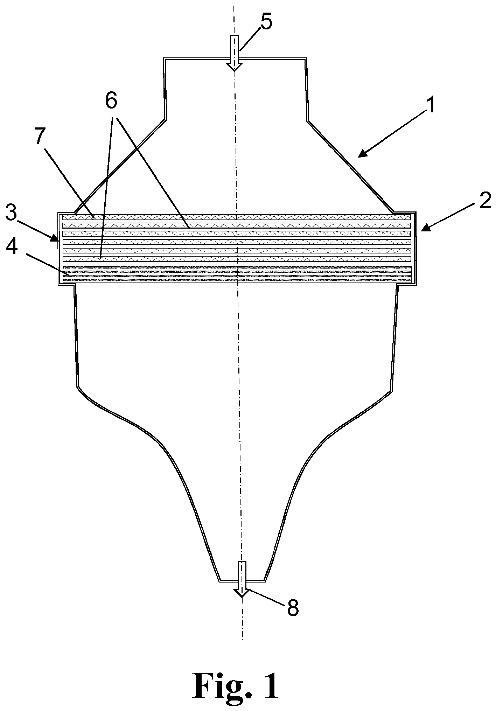

**Figur 1** zeigt schematisch einen senkrecht positionierten Strömungsreaktor 1 zur heterogen-katalytischen Verbrennung von Ammoniak. Das Katalysatorsystem 2 bildet die eigentliche Reaktionszone des Strömungsreaktors 1. Es umfasst eine Katalysatorpackung 3 und nachgeschaltete Getternetze 4. Die Katalysatorpackung 3 umfasst mehrere, in Strömungsrichtung 5 des Frischgases hintereinander angeordnete einlagige Katalysatornetze 6 aus einem ersten, vergleichsweise "rhodiumarmen" PtRh-Edelmetalldraht, auf die ein weiteres einlagiges Katalysatornetz 7 aus einem zweiten, vergleichsweise "rhodiumreichen" PtRh-Edelmetalldraht aufgelegt ist. Das in Strömungsrichtung 5 vorderste Katalysatornetz 7 bildet die einzige Lage der "vorderen Gruppe von Katalysatornetzlagen" und die übrigen Katalysatornetze 6 bilden eine "stromabwärtige Gruppe von Katalysatornetzlagen" im Sinne der Erfindung. Beispiele für rhodiumarme und rhodiumreiche Edelmetalldraht-Zusammensetzungen und Wirkungen dieser und ähnlicher Katalysatornetzsysteme werden im Folgenden näher erläutert. Ausführungsformen sind in den Tabellen 1 bis 4 näher spezifiziert.

Das Frischgas ist ein Ammoniak-Luftgemisch mit einem nominalen Ammoniakgehalt von 10,7 Vol.-%. Es wird auf eine Vorheiztemperatur von 175°C erwärmt und von oben in den Reaktor 1 unter einem erhöhten Druck von 5 bar eingeleitet. Beim Eintritt in die Katalysatorpackung 3 erfolgt eine Zündung des Gasgemischs und eine anschließende exotherme Verbrennungsreaktion, die die gesamte Katalysatorpackung 3 erfasst. Dabei findet folgende Hauptreaktion statt:

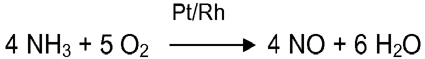

Dabei wird Ammoniak (NH₃) zu Stickstoffmonoxid (NO) und Wasser (H₂O) umgesetzt. Das gebildete Stickstoffmonoxid (NO) reagiert im abströmenden Reaktionsgasgemisch (symbolisiert durch den die Strömungsrichtung des Reaktionsgasgemischs anzeigenden Richtungspfeil 8) mit überschüssigem Sauerstoff zu Stickstoffdioxid (NO₂), das mit Wasser in einer nachgeschalteten Absorptionsanlage zu Salpetersäure (HNO₃) umgesetzt wird.

Die Katalysatornetze 6, 7 sind jeweils textile Flächengebilde, die durch maschinelles Wirken eines Edelmetalldrahtes mit einem Durchmesser von 76 µm aus verschiedenen binären Platin-Rhodium-Legierungen erzeugt sind. Im Strömungsreaktor 1 wurden die in den Tabellen 1 bis 4 spezifizierten Katalysatorsysteme getestet.

Bei den Testreaktoren umfasst die Katalysatorpackung sechs einlagige Katalysatornetze 6, 7, die durch Wirken eines Edelmetalldrahts aus einer binären PtRh-Legierung erzeugt worden sind. Die Reihenfolge der Benennung in der Tabelle gibt die Abfolge in Strömungsrichtung des Frischgases wieder. Zusätzlich sind bei allen Reaktoren Getternetze 4 vorgesehen, die aus sechs aktiven Catchment-Netzlagen ("Getternetze") aus Pd82.5Pt15Rh2.5 bestehen.

Der Referenzreaktor gemäß Tabelle 1 repräsentiert dabei einen Reaktor nach derzeitigem industriellen Standard für Mitteldruckanlagen. Die einlagigen Katalysatornetze sind aus einem Edelmetalldraht mit einem Draht-Durchmesser von 76 µm erzeugt. Das Flächengewicht der eingesetzten PtRh5-Katalysatornetze beträgt wie in der Spalte "Fl.-Gew. pro Lage" angegeben, jeweils 600 g/m². Die Summe der Flächengewichte aller Lagen L1 bis L6 der Katalysatorpackung beträgt somit 3600 g/m². Die Flächengewichte sind nominale, anfängliche Flächengewichte, wie sie mit einem Edelmetalldraht mit einem Drahtdurchmesser von 76 µm standardmäßig erzielbar sind.

**Tabelle 1: Referenzreaktor**

| **Netzlage** | **Edelmetall** | **Fl.-Gew. pro Lage [g/m²]** |
|---|---|---|
| L1 | PtRh5 | 600 |
| L2 | PtRh5 | 600 |
| L3 | PtRh5 | 600 |
| L4 | PtRh5 | 600 |
| L5 | PtRh5 | 600 |
| L6 | PtRh5 | 600 |
| | | **Σ: 3600** |

In den folgenden Tabellen 2 bis 4 sind Daten zu Testreaktoren R1 bis R3 angegeben. In der Spalte "Gruppen-Zuordnung" steht die Ziffer "1" für die Zuordnung der jeweiligen Katalysatornetzlage zur vorderen Gruppe (im Folgenden auch als "Gruppe 1" bezeichnet), und die Ziffer "2" zeigt die Zuordnung der jeweiligen Katalysatornetzlagen zur stromabwärtigen Gruppe an (im Folgenden auch als "Gruppe 2" bezeichnet). Bei allen Testreaktoren R1 bis R3 bildet allein die vorderste Katalysatornetzlage L1 die "vordere Gruppe" im Sinne der Erfindung; diese Gruppe ist zusätzlich durch Grauschattierung markiert.

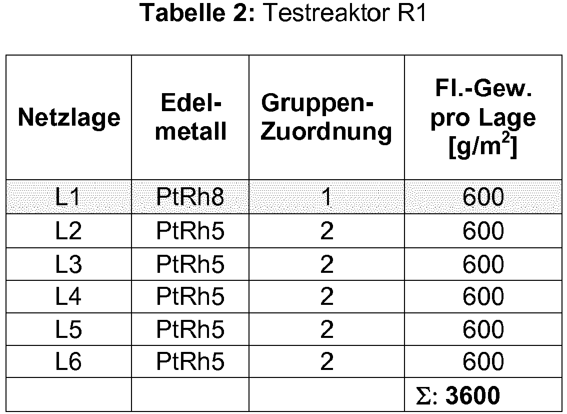

Beim Testreaktor R1 besteht die oberste Katalysatornetzlage aus einer PtRh8-Legierung; die übrigen Katalysatornetze bestehen aus der üblichen PtRh5-Legierung wie beim Referenzreaktor.

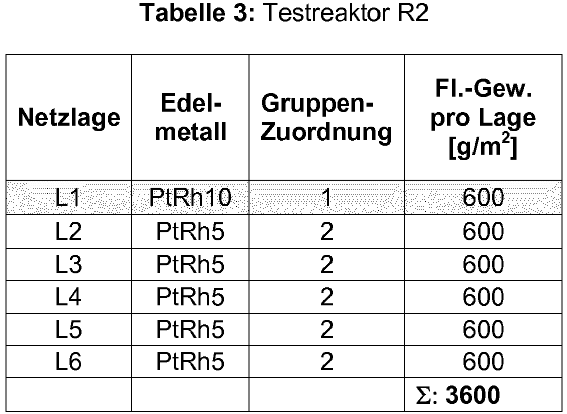

Beim Testreaktor R2 besteht die oberste Katalysatornetzlage aus einer PtRh10-Legierung; die übrigen Katalysatornetze bestehen wiederum aus der üblichen PtRh5-Legierung.

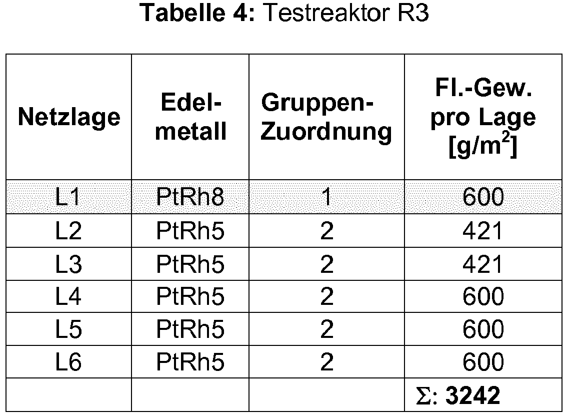

Beim Testreaktor R3 besteht die oberste Katalysatornetzlage aus einer PtRh8-Legierung und sie hat ein Flächengewicht von 600 g/m². Die beiden daran unmittelbar anschließenden Katalysatornetze bestehen aus einer PtRh5-Legierung und haben ein Wirkmuster mit größerer Maschenweite, das zu einem vergleichsweise geringen Flächengewicht von 421 g/m² führt. Die beiden letzten Katalysatornetze der Katalysatorpackung bestehen wiederum aus der PtRh5-Legierung mit einem Flächengewicht von 600 g/m². Der Edelmetalleinsatz bei Reaktor R3 ist um 358 g/m² niedriger als beim Referenzreaktor und beim Testreaktor R1.

Die Netzlagen L1 bis L3 bilden ein vorderes Ensemble im Sinne einer bevorzugten Ausführungsform der Erfindung, bei der sich eine Edelmetallersparnis gegenüber einem Standardreaktor dadurch ergibt, dass die Katalysatornetze des vorderen Ensembles einen in engen Grenzen geringeren Edelmetallgehalt als die Katalysatornetze des stromabwärtigen Ensembles haben. Im Ausführungsbeispiel beträgt das mittlere Flächengewicht des vorderen Ensembles 481 g/m², das sind etwa 20% weniger als das mittlere Flächengewicht des stromabwärtigen Ensembles mit den Katalysatornetzlagen L4 bis L6.

Die Testreaktoren wurden bei folgenden, jeweils gleichen Testbedingungen betrieben.

| | |
|---|---|
| Druck: | 5 bar (absolut) |
| Durchsatz: | 12 Tonnen Stickstoff (aus Ammoniak) pro Tag und effektiver Querschnittsfläche der Katalysatorpackung in Quadratmeter (abgekürzt mit 12 tN/m²d) |
| NH₃-Anteil: | 10.7 Vol.-% im Frischgas |
| Vorheiztemp.: | 175°C (Temperatur des NH₃/Luft Gemisches), woraus sich in den Testreaktoren eine Netztemperatur von 890°C ergibt. |

Im Abstand von etwa 24 h wurde die Entwicklung der katalytischen Effizienz als Ausbeute an NO und der Anteil des als Nebenprodukt anfallenden N₂O gemessen. Für jeden der Testreaktoren R1 bis R4 ergeben sich jeweils fünf Messergebnisse.

Die Messung der katalytischen Effizienz (das heißt, der Produktausbeute an NO) hat folgenden Ablauf:
1. Vorab wird sichergestellt, dass die Standzeit des Katalysatorsystems mit der des Referenzreaktors vergleichbar ist und dass das Katalysatorsystem für den vollständigen Umsatz des eingesetzten Ammoniaks geeignet ist. Das bedeutet, dass NH₃ im Produktgas nicht mehr in nennenswerter Menge vorhanden ist, was mittels massenspektrometrischer Untersuchung des Produktgases überprüft wird.
2. Gleichzeitige Entnahme eine Probe von NH₃/Luft stromaufwärts zur Katalysatorpackung und einer Probe aus dem Produktgas stromabwärts in jeweils eigenständige evakuierte Kolben. Die Masse des Gases wird durch Wiegen bestimmt.
3. Das NH₃ Luft/Gemisch wird in destilliertem Wasser absorbiert und mittels 0.1N Schwefelsäure und Methylrot nach Farbumschlag titriert.
4. Die nitrosen Produktgase werden in 3%iger Natriumperoxid Lösung absorbiert und mittels 0.1N Natriumhydroxid Lösung und Methylrot nach Farbumschlag titriert.
5. Die katalytische Effizienz Eta ergibt sich aus: Eta = 100 x Cn / Ca, wobei Ca die mittlere NH₃ Konzentration aus 7 Einzelmessungen im Frischgas in Gewichtsprozent und Cn die mittlere NOx Konzentration aus 7 Einzelmessungen ist, ausgedrückt als Gewichtsprozent des NH₃ welches zu NOx oxidiert worden ist.
6. Separat wird der Volumenanteil an N₂O im Produktgas mittels GasChromatographie bestimmt.

Die Messergebnisse sind in **Tabelle 5** zusammengefasst. Die in Spalte 1 eingetragene fortlaufende Nummer der Messung entspricht etwa der Betriebsdauer des Katalysatorsystems in Tagen. In den mit "NO-NO_{Ref}" bezeichneten Spalten von Tabelle 5 ist die Ausbeute-Differenz an Stickstoffmonoxid in absoluten Prozentpunkten im Vergleich zum Referenzreaktor angegeben (beispielsweise ergibt Messung Nr. 1 bei Reaktor R1 eine Ausbeute an NO von 96,2%, und damit gegenüber dem Messwert 95,3% im Referenzreaktor einen Unterschied NO-NO_{Ref} von +0,9 Prozentpunkten). In den mit "N₂O - N₂O_{Ref}" bezeichneten Spalten ist die Differenz an Distickstoffmonoxid jeweils im Vergleich zum Referenzreaktor in Vol.-ppm angegeben.

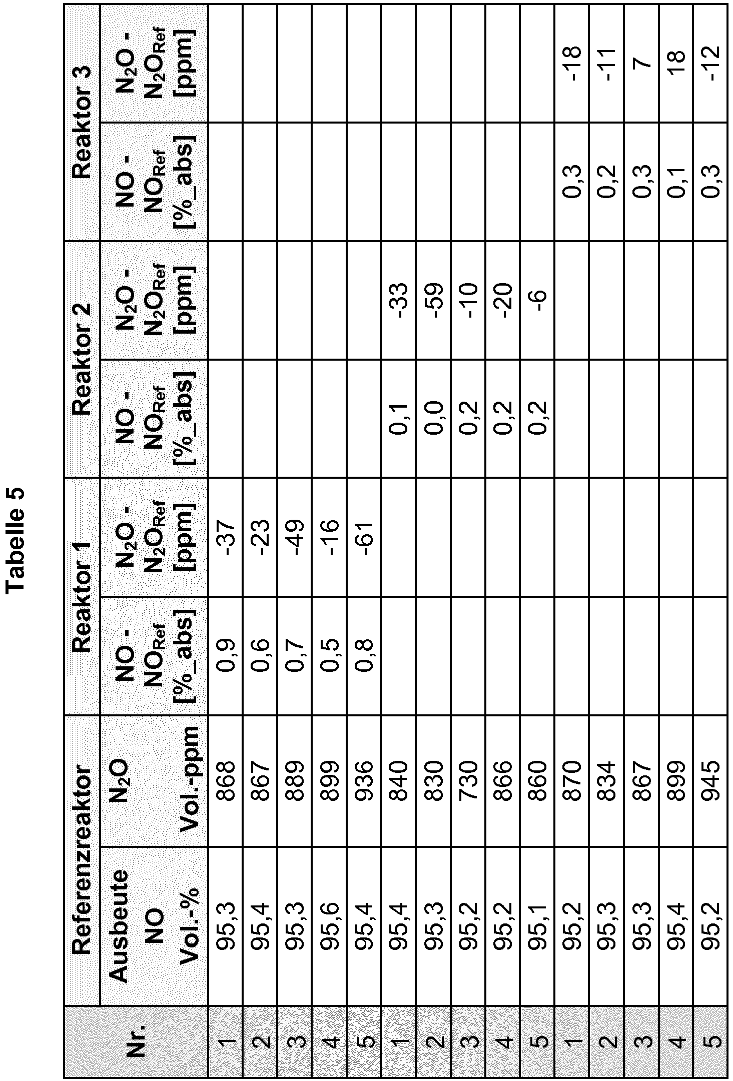

### Messergebnisse

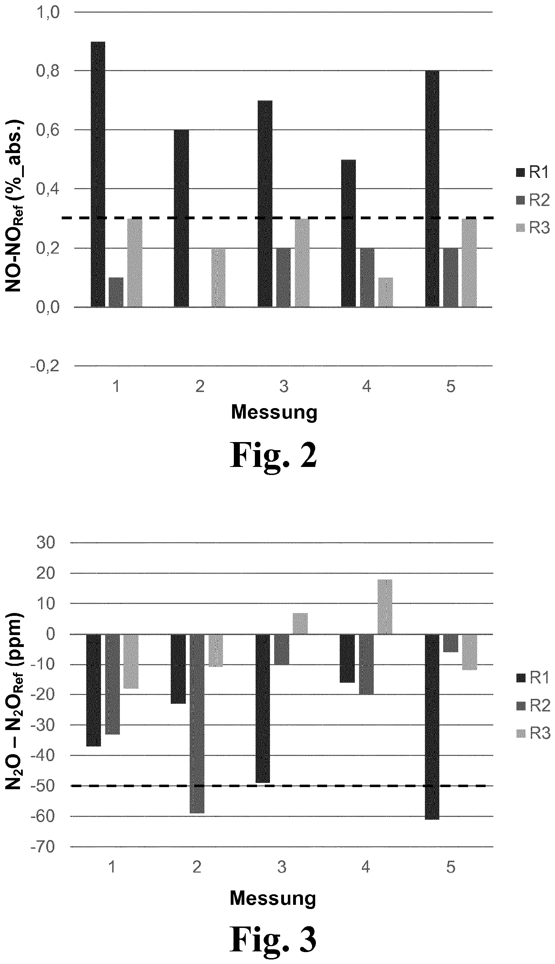

Die Messergebnisse von Tabelle 5 sind in den Diagrammen der Figuren 2 und 3 graphisch dargestellt und werden anhand dieser Figuren nachfolgend erläutert.

Das Diagramm von **Figur 2** zeigt für die Reaktoren R1 bis R3 jeweils ein Maß für die katalytische Effizienz für den Stickstoffdurchsatz von 12 tN/m²d. Auf der y-Achse ist die Differenz der Ausbeute an Stickstoffmonoxid im Vergleich zum Referenzreaktor "NO-NO_{Ref}" in absoluten Prozentpunkten (%_abs.) aufgetragen. Auf der x-Achse bezeichnen die Ziffern 1 bis 5 die fortlaufende Nummer der jeweiligen Messung.

Demnach ergibt sich beim Reaktor R1 eine deutlich höhere Effizienz der Umsetzung zu NO im Vergleich zum Referenzreaktor gemäß dem industriellen Standard. Die Effizienz-Erhöhung schwankt um 0,6%, was bei einer typischen Ammoniak-Einsatzmenge in einem Industrie-Reaktor von etwa 12 tN/m²d eine zusätzliche Masse von 154 kg NO/m²d bedeutet.

Beim Reaktor R3 ergibt sich trotz des geringeren Edelmetalleinsatzes eine katalytische Effizienz, die im Rahmen des Messfehlers vergleichbar mit der Ausbeute beim Referenzreaktor ist. Der Messfehler liegt bei etwa +/- 0,3 Prozentpunkten, wie anhand der gestrichelten Linie markiert. Da die erste Lage jedoch ein höheres Flächengewicht als die unteren Lagen des ersten Ensembles hat, ist kein signifikanter Effizienzgewinn wie bei Reaktor 1 sichtbar.

Der Reaktor R2 zeigt eine Ausbeute des Hauptprodukts NO, die unter Berücksichtigung des Messfehlers nicht höher ist als die des Referenzreaktors. Dieser Effekt kann nur auf die besonders rhodiumreiche vorderste Katalysatornetzlage L1 bei R2 zurückgeführt werden. Der Reaktor R2 zeigt somit keine verbesserte katalytische Effizienz und stellt insoweit ein Vergleichsbeispiel für die Erfindung dar.

Das Diagramm von **Figur 3** zeigt die Messergebnisse zur N₂O-Bildung bei den Testreaktoren R1 bis R3. Auf der y-Achse ist die Differenz der Distickstoffoxid-Menge im Produktgas (N₂O-N₂O_{Ref}) im Vergleich zum Referenzreaktor in Vol.-ppm aufgetragen. Auf der x-Achse bezeichnen wiederum die Ziffern 1 bis 5 die fortlaufende Nummer der jeweiligen Messung.

Demnach ergibt sich bei allen Testreaktoren R1 bis R3 eine N₂O-Bildung, die unter Berücksichtigung des Messfehlers derjenigen des Referenzreaktors vergleichbar ist. Der Standard-Messfehler beträgt etwa +/- 50 Vol.-ppm und ist wiederum durch eine gestrichelte Linie angedeutet.

## Patentansprüche

1. Katalysatorsystem (1) für die katalytische Verbrennung von Ammoniak zu Stickstoffoxiden in einer Mitteldruckanlage, mit einer Vielzahl aus platinbasiertem Edelmetalldraht gestrickter, gewirkter oder gewebter, ein- oder mehrlagiger Katalysatornetze (6; 7), die in einer Frischgas-Strömungsrichtung (5) gesehen hintereinander angeordnet eine vordere Gruppe von Netzlagen (7) und mindestens eine der vorderen Gruppe nachgeordnete stromabwärtige Gruppe von Netzlagen (6) bilden, **dadurch gekennzeichnet, dass** die vordere Gruppe eine Netzlage (7) aus einem ersten, rhodiumreichen Edelmetalldraht umfasst, wobei die Netzlage (7) aus dem rhodiumreichen Edelmetalldraht eine dem Frischgas zugewandte, vorderste Netzlage (7) ist, und dass die stromabwärtige Gruppe Netzlagen (6) aus einem zweiten, rhodiumarmen Edelmetalldraht umfasst, wobei der rhodiumreiche Edelmetalldraht und der rhodiumarme Edelmetalldraht aus Platin und Rhodium bestehen und der Rhodiumgehalt im rhodiumreichen Edelmetalldraht mindestens 7 Gew.-% und maximal 9 Gew.-% beträgt und der Rhodiumanteil im rhodiumarmen Edelmetalldraht im Bereich von 4 bis 6 Gew.-% liegt.

2. Katalysatorsystem nach Anspruch 1, **dadurch gekennzeichnet, dass** der Rhodiumanteil im rhodiumreichen Edelmetalldraht im Bereich von 7,8 bis 8,2 Gew.-% und der Rhodiumanteil im rhodiumarmen Edelmetalldraht im Bereich von 4,8 bis 5,2 Gew.-% liegen.

3. Katalysatorsystem nach einem der vorhergehenden Ansprüche, **dadurch gekennzeichnet, dass** die vordere Gruppe der Netzlagen (6) am Gesamtgewicht aller Katalysatornetze einer Katalysatorpackung (3) einen Gewichtsanteil von weniger als 30%, vorzugsweise weniger als 25%, und besonders bevorzugt weniger als 20% hat.

4. Katalysatorsystem nach einem der vorhergehenden Ansprüche, **dadurch gekennzeichnet, dass** die vordere Gruppe maximal drei Netzlagen (7) umfasst.

5. Katalysatorsystem nach einem der vorhergehenden Ansprüche, **dadurch gekennzeichnet, dass** die vordere Gruppe der Netzlagen (7) von der vordersten Netzlage (7) gebildet wird.

6. Katalysatorsystem nach Anspruch 5, dass die vorderste Netzlage (7) auf den Netzlagen (6) der stromabwärtigen Gruppe aufliegt.

7. Katalysatorsystem nach einem der vorhergehenden Ansprüche, **dadurch gekennzeichnet, dass** die Katalysatornetze (6; 7) in der Frischgas-Strömungsrichtung (5) gesehen hintereinander angeordnet eine Katalysatorpackung (3) aus einem vorderen Ensemble mit drei Katalysatornetzen mit einem ersten mittleren Flächengewicht und einem dem vorderen Ensemble nachgeordneten, stromabwärtigen Ensemble von Katalysatornetzlagen mit einem zweiten mittleren Flächengewicht bilden, wobei das mittlere Flächengewicht des vorderen Ensembles bezogen auf das zweite mittlere Flächengewicht ein Mindergewicht im Bereich von 1,5 % bis 29% aufweist, und dass das erste mittlere Flächengewicht im Bereich von 410 bis 530 g/m² und das zweite mittlere Flächengewicht im Bereich von 540 bis 790 g/m² liegen.

8. Katalysatorsystem nach Anspruch 7, **dadurch gekennzeichnet, dass** das Mindergewicht maximal 25% beträgt und das erste mittlere Flächengewicht im Bereich von 415 bis 510 g/m² liegt, und dass das zweite mittlere Flächengewicht im Bereich von 575 bis 710 g/m² liegt.

9. Katalysatorsystem nach Anspruch7 oder 8, **dadurch gekennzeichnet, dass** die Katalysatornetze des vorderen Ensembles aus einem Gewirk mit einem ersten Wirkmuster und einer ersten Maschenweite oder aus einem Gewebe mit einem ersten Webmuster und einer ersten Maschenweite oder aus einem Gestrick mit einem ersten Strickmuster und einer ersten Maschenweite, und die Katalysatornetze des stromabwärtigen Ensembles aus einem Gewirk mit einem zweiten Wirkmuster und einer zweiten Maschenweite oder aus einem Gewebe mit einem zweiten Webmuster und einer zweiten Maschenweite oder aus einem Gestrick mit einem zweiten Strickmuster und einer zweiten Maschenweite bestehen, wobei die erste Maschenweite größer ist als die zweite Maschenweite.

10. Katalysatorsystem nach einem der Ansprüche 7 bis 9, **dadurch gekennzeichnet, dass** das individuelle Flächengewicht der Katalysatornetzlagen des vorderen Ensembles in der Abfolge in Frischgas-Strömungsrichtung (5) gesehen konstant ist oder zunimmt.

11. Verfahren zur katalytischen Verbrennung von Ammoniak zu Stickstoffoxiden in einer Mitteldruckanlage, indem ein Ammoniak und Sauerstoff enthaltendes Frischgas durch ein Katalysatorsystem (2) geleitet und Ammoniak dabei verbrannt wird, wobei das Frischgas mit einem Ammoniakgehalt zwischen 9,5 und 12 Vol.-% unter einem Druck im Bereich zwischen 3,5 und 7 bar bei einer Katalysatornetztemperatur im Bereich von 870 bis 920°C und mit einem Durchsatz im Bereich von 6 bis 16 tN/m²d durch ein Katalysatorsystem (2) nach einem der Ansprüche 1 bis 10 geleitet wird.

## Claims

1. A catalyst system (1) for the catalytic combustion of ammonia to form nitrogen oxides in a medium-pressure plant, comprising a plurality of single-layer or multi-layer catalyst gauzes (6; 7) weft-knitted, warp-knitted or woven from platinum-based noble metal wire, which catalyst gauzes, arranged one behind the other as seen in a fresh gas flow direction (5), form a front group of gauze layers (7) and at least one downstream group of gauze layers (6) arranged downstream of the front group, **characterized in that** the front group comprises a gauze layer (7) made of a first, rhodium-rich noble metal wire, the gauze layer (7) made of the rhodium-rich noble metal wire being a frontmost gauze layer (7) facing the fresh gas, and **in that** the downstream group comprises gauze layers (6) made of a second, rhodium-poor noble metal wire, the rhodium-rich noble metal wire and the rhodium-poor noble metal wire consisting of platinum and rhodium, and the rhodium content in the rhodium-rich noble metal wire being at least 7 wt.% and at most 9 wt.%, and the rhodium content in the rhodium-poor noble metal wire being in the range of from 4 to 6 wt.%.

2. The catalyst system according to claim 1, **characterized in that** the rhodium content in the rhodium-rich noble metal wire is in the range of from 7.8 to 8.2 wt.%, and the rhodium content in the rhodium-poor noble metal wire is in the range of from 4.8 to 5.2 wt.%.

3. The catalyst system according to any of the preceding claims, **characterized in that** the front group of the gauze layers (6) has a weight proportion of less than 30%, preferably less than 25%, and particularly preferably less than 20%, with respect to the total weight of all the catalyst gauzes of a catalyst pack (3).

4. The catalyst system according to any of the preceding claims, **characterized in that** the front group comprises a maximum of three gauze layers (7).

5. The catalyst system according to any of the preceding claims, **characterized in that** the front group of the gauze layers (7) is formed by the frontmost gauze layer (7).

6. The catalyst system according to claim 5, **characterized in that** the frontmost gauze layer (7) rests on the gauze layers (6) of the downstream group.

7. The catalyst system according to any of the preceding claims, **characterized in that** the catalyst gauzes (6; 7), arranged one behind the other as seen in the fresh gas flow direction (5), form a catalyst pack (3) consisting of a front assembly comprising three catalyst gauzes having a first average weight per unit area and a downstream assembly, arranged downstream of the front assembly, of catalyst gauze layers having a second average weight per unit area, the average weight per unit area of the front assembly comprising a weight reduction in the range of from 1.5% to 29% relative to the second average weight per unit area, and **in that** the first average weight per unit area is in the range of from 410 to 530 g/m², and the second average weight per unit area is in the range of 540 to 790 g/m².

8. The catalyst system according to claim 7, **characterized in that** the weight reduction is at most 25%, and the first average weight per unit area is in the range of from 415 to 510 g/m², and **in that** the second average weight per unit area is in the range of from 575 to 710 g/m².

9. The catalyst system according to claim 7 or 8, **characterized in that** the catalyst gauzes of the front assembly consist of a warp-knitted fabric having a first warp-knit pattern and a first mesh size, or of a woven fabric having a first weave pattern and a first mesh size, or of a weft-knitted fabric having a first weft-knit pattern and a first mesh size, and the catalyst gauzes of the downstream assembly consist of a warp-knitted fabric having a second warp-knit pattern and a second mesh size, or of a woven fabric having a second weave pattern and a second mesh size, or of a weft-knitted fabric having a second weft-knit pattern and a second mesh size, the first mesh size being greater than the second mesh size.

10. The catalyst system according to any of claims 7 to 9, **characterized in that** the individual weight per unit area of the catalyst gauze layers of the front assembly is constant or increases in the sequence as seen in the fresh gas flow direction (5).

11. A method for the catalytic combustion of ammonia to form nitrogen oxides in a medium-pressure plant, in which a fresh gas containing ammonia and oxygen is conducted through a catalyst system (2) and ammonia is thereby combusted, wherein the fresh gas comprising an ammonia content between 9.5 and 12 vol.% is passed through a catalyst system (2) according to any of claims 1 to 10 under a pressure in the range between 3.5 and 7 bar at a catalyst gauze temperature in the range of from 870 to 920°C and with a throughput in the range of from 6 to 16 tN/m²d.

## Revendications

1. Système de catalyseur (1) pour la combustion catalytique d'ammoniac pour obtenir des oxydes d'azote dans une installation à moyenne pression, comportant une pluralité de toiles de catalyseur (6 ; 7) monocouches ou multicouches tricotées, maillées ou tissées en fil en métal noble à base de platine, lesquelles toiles, vues dans un sens d'écoulement de gaz frais (5), forment de manière disposée les unes derrière les autres un groupe avant de couches de toiles (7) et au moins un groupe aval de couches de toiles (6) disposé en aval du groupe avant, **caractérisé en ce que** le groupe avant comprend une couche de toile (7) réalisée en un premier fil en métal noble riche en rhodium, dans lequel la couche de toile (7) réalisée en fil en métal noble riche en rhodium est une couche de toile (7) la plus à l'avant tournée vers le gaz frais, et **en ce que** le groupe aval comprend des couches de toiles (6) réalisées en un second fil en métal noble pauvre en rhodium, dans lequel le fil en métal noble riche en rhodium et le fil en métal noble pauvre en rhodium sont constitués de platine et de rhodium et la teneur en rhodium dans le fil en métal noble riche en rhodium est d'au moins 7 % en poids et d'au plus 9 % en poids et la proportion de rhodium dans le fil en métal noble pauvre en rhodium se situe dans la plage allant de 4 à 6 % en poids.

2. Système de catalyseur selon la revendication 1, **caractérisé en ce que** la proportion de rhodium dans le fil en métal noble riche en rhodium se situe dans la plage allant de 7,8 à 8,2 % en poids et la proportion de rhodium dans le fil en métal noble pauvre en rhodium se situe dans la plage allant de 4,8 à 5,2 % en poids.

3. Système de catalyseur selon l'une des revendications précédentes, **caractérisé en ce que** le groupe avant des couches de toiles (6), par rapport au poids total de toutes les toiles de catalyseur d'un garnissage de catalyseur (3), a une proportion en poids inférieure à 30 %, de préférence inférieure à 25 % et de manière particulièrement préférée inférieure à 20 %.

4. Système de catalyseur selon l'une des revendications précédentes, **caractérisé en ce que** le groupe avant comprend au plus trois couches de toiles (7).

5. Système de catalyseur selon l'une des revendications précédentes, **caractérisé en ce que** le groupe avant des couches de toiles (7) est formé par la couche de toile (7) la plus à l'avant.

6. Système de catalyseur selon la revendication 5, **caractérisé en ce que** la couche de toile (7) la plus à l'avant repose sur les couches de toiles (6) du groupe aval.

7. Système de catalyseur selon l'une des revendications précédentes, **caractérisé en ce que** les toiles de catalyseur (6 ; 7), vues dans le sens d'écoulement de gaz frais (5), forment de manière disposée les unes derrière les autres un garnissage de catalyseur (3) constitué d'un ensemble avant comportant trois toiles de catalyseur comportant une première masse surfacique moyenne et d'un ensemble de couches de toiles de catalyseur aval disposé en aval de l'ensemble avant et comportant une seconde masse surfacique moyenne, dans lequel la masse surfacique moyenne de l'ensemble avant par rapport à la seconde masse surfacique moyenne présente un allègement dans la plage allant de 1,5 % à 29 %, et **en ce que** la première masse surfacique moyenne se situe dans la plage allant de 410 à 530 g/m² et la seconde masse surfacique moyenne se situe dans la plage allant de 540 à 790 g/m².

8. Système de catalyseur selon la revendication 7, **caractérisé en ce que** l'allègement est au plus de 25 % et la première masse surfacique moyenne se situe dans la plage allant de 415 à 510 g/m², et **en ce que** la seconde masse surfacique moyenne se situe dans la plage allant de 575 à 710 g/m².

9. Système de catalyseur selon la revendication 7 ou 8, **caractérisé en ce que** les toiles de catalyseur de l'ensemble avant sont constituées d'un tissu maillé comportant un premier motif tissé et un premier maillage ou d'un tissu comportant un premier motif de tissage et un premier maillage ou d'un tricot comportant un premier motif de tricot et un premier maillage, et les toiles de catalyseur de l'ensemble aval sont constituées d'un tissu maillé comportant un second motif tissé et un second maillage ou d'un tissu comportant un second motif de tissage et un second maillage ou d'un tricot comportant un second motif de tricot et un second maillage, dans lequel le premier maillage est supérieur au second maillage.

10. Système de catalyseur selon l'une des revendications 7 à 9, **caractérisé en ce que** la masse surfacique individuelle des couches de toiles de catalyseur de l'ensemble avant de la séquence, vue dans le sens d'écoulement de gaz frais (5), est constante ou augmente.

11. Procédé permettant la combustion catalytique d'ammoniac pour obtenir des oxydes d'azote dans une installation à moyenne pression, par l'acheminement d'un gaz frais contenant de l'ammoniac et de l'oxygène à travers un système de catalyseur (2) et ainsi la combustion de l'ammoniac, dans lequel le gaz frais est acheminé à travers un système de catalyseur (2) selon l'une des revendications 1 à 10 avec une teneur en ammoniac comprise entre 9,5 et 12 % en volume, à une pression dans la plage comprise entre 3,5 et 7 bar, à une température de toile de catalyseur dans la plage allant de 870 à 920 °C et avec un débit dans la plage allant de 6 à 16 tN/m²d.
